(19) Europäisches Patentamt
European Patent Office
Office européen des brevets

(11) EP 0 734 862 B1

(12) **EUROPÄISCHE PATENTSCHRIFT**

(45) Veröffentlichungstag und Bekanntmachung des Hinweises auf die Patenterteilung:
**27.01.1999 Patentblatt 1999/04**

(51) Int. Cl.⁶: **B41F 33/00**

(21) Anmeldenummer: 96102802.4

(22) Anmeldetag: **24.02.1996**

(54) **Verfahren zum Feststellen von Farbverschmutzungen**

Method for detecting colour impurities

Procédé pour détecter des impuretés de couleur

(84) Benannte Vertragsstaaten:
**AT BE CH DE FR GB IT LI NL SE**

(30) Priorität: **25.03.1995 DE 19511076**

(43) Veröffentlichungstag der Anmeldung:
**02.10.1996 Patentblatt 1996/40**

(73) Patentinhaber:
**MAN Roland Druckmaschinen AG**
**63075 Offenbach (DE)**

(72) Erfinder: **Schramm, Peter**
**60594 Frankfurt (DE)**

(74) Vertreter:
**Marek, Joachim, Dipl.-Ing.**
**c/o MAN Roland Druckmaschinen AG**
**Patentabteilung/FTB S,**
**Postfach 10 12 64**
**63012 Offenbach (DE)**

(56) Entgegenhaltungen:
**EP-A- 0 064 024        EP-A- 0 255 924**
**EP-A- 0 283 899        EP-A- 0 370 126**
**FR-A- 2 512 950**

**Beschreibung**

Die Erfindung betrifft ein Verfahren zum Feststellen von Farbverschmutzungen gemäß dem Oberbegriff von Anspruch 1.

Bei der Herstellung farbiger Druckerzeugnisse in den unterschiedlichsten Herstellungsverfahren ist es bekannt, die Färbung auf dem Bedruckstoff fotoelektrisch zu erfassen und diese Meßwerte (Remissionen) in Werte umzurechnen, aus denen sich Stellwerte für evtl. nötige Farbzufuhrveränderungen ermitteln lassen. So ist es gerade beim Offsetdruck seit langem bekannt, insbesondere in einer Kontrolleiste mitgedruckte Meßfelder densitometrisch abzutasten und diese Farbdichtewerte mit vorgegebenen Soll-Farbdichtewerten zu vergleichen. Aus der Soll-Ist-Differenz können dann in einfacher Weise Stellbefehle für die zonale Farbzufuhr abgeleitet werden, also die nötige Verstärkung bzw. Verminderung der zuzuführenden Farbe.

Der Vorteil der densitometrischen Farbzufuhrüberwachung liegt dabei darin, daß hier ein eindeutiger Zusammenhang zwischen den auf dem Bedruckstoff aufgebrachten Farbschichtdicken und dem Farbdichtewert existierte. Um die Farbdichtewerte von mehreren Farben beim Druck mehrfarbiger Druckerzeugnisse überwachen zu können, sind Densitometer entwickelt worden, welche mehrere Filter, insbesondere Spektralfilter aufweisen. Ein derartiges Densitometer ist nebst den entsprechenden Anwendungsmöglichkeit in der DE-Z "Offsetpraxis 12/1983", Seiten 34ff beschrieben. Da bei einem derartigen Gerät bei einer Messung stets mehrere Farbdichtewerte anfallen, wird für die Farbungskontrolle meistens der größte Farbdichtewert herangezogen. Dies ist derjenige Farbdichtewert, der sich durch ein Filter ergibt, welches Durchlaßeigenschaften aufweist, welche komplementär zu den Remissionseigenschaften der Druckfarbe sind.

Gerade bei der Herstellung von Offsetdruckerzeugnissen kommt es insbesondere bei größeren Auflagen vor, daß die Färbung und somit der Farbeindruck des Druckproduktes sich ändert, obwohl an der Farbzufuhr und sonstigen Einstellungen der Druckmaschine nichts verstellt wurde. Es hat sich dabei herausgestellt, daß diese Farbeindruckveränderungen oft ihre Ursache in einer Farbverschmutzung haben. Farbe, welche in den vorhergehenden Druckwerken aufgedruckt wurde, gelangt durch Rückspaltung in die nachfolgenden Druckwerke und dabei ist insbesondere die Farbe Gelb (Yellow) sehr empfindlich gegenüber Beimischungen der Farben Blau (Cyan) und Rot (Magenta). Derartige Farbverunreinigungen ergeben bei Mischfarben im Rastertonbereich deutlich wahrnehmbare Farbverschiebungen.

Aus der EP 0 228 347 B1 ist ein Verfahren zur Farbauftragsteuerung bei einer Druckmaschine bekannt, bei welchem die fotoelektrisch erfaßten Remissionen in auf ein ausgewähltes Farbkoordinatensystem bezogene Farborte umgerechnet werden und aus dem Farbort eines Vorgabebogens und dem Farbort des Druckproduktes der Farbabstand gebildet wird. Als die ausgewählten Farbkoordinatensysteme werden die dem menschlichen Farbempfinden nachgebildeten L, u, v- bzw. L, a, b-Farbsysteme vorgeschlagen. Der Vorteil dieser Färbungssteuerung aufgrund farbmetrischer Informationen soll dabei darin bestehen, daß Farbveränderungen rechtzeitig erkannt werden können, wobei diese beispielsweise durch Gummituchverschmutzung bzw. Farbverschmutzung hervorgerufen sind.

Der Vorteil der Farbmetrik zur Druckmaschinensteuerung liegt in der anschaulichen Wiedergabe von Farbortdifferenzen. Als nachteilig muß aber angesehen werden, daß zwischen den Farbortdifferenzen zwischen einem Probebogen und einem OK-Bogen und den zur Korrektur nötigen Stellbefehlen für die Farbführung der einzelnen Farben sehr komplexe, nicht lineare und empirisch nur schwer handhabbare Zusammenhänge existieren. Eine Schichtdickenänderung einer Einzelfarbe wirkt sich somit nicht nur auf die in den L, u, v-bzw. L, a, b-Farbsystemen definierte Helligkeit sondern auch in den Farbtonkoordinaten aus.

Aus der DE-Publikation KFK-PDV 177 "Mikrorechner-Regelsystem für den Farbfluß von Bogenoffsetmaschinen" Dezember 1977, Seite 19ff ist es bekannt, daß mit einem Densitometer mit mehreren Filtern die Kontrolle einer Farbverschmutzung möglich ist. Hier ist aber nicht angegeben, wie die mehreren Farbdichtewerte einer Meßprobe auszuwerten sind.

Aufgabe der vorliegenden Erfindung ist es daher, ein Verfahren gemäß dem Oberbegriff von Anspruch 1 derartig weiterzubilden, so daß eine eindeutige Feststellung von Farbverschmutzung möglich ist.

Gelöst wird diese Aufgabe durch die kennzeichnenden Merkmale von Anspruch 1. Weiterbildungen der Erfindung ergeben sich aus den Unteransprüchen.

In der nachfolgenden Erfindungsbeschreibung wird unter dem Begriff Hauptfarbdichte einer Farbe der größte Farbdichtewert verstanden. Der Hauptfarbdichtewert für die Farbe Yellow ist also derjenige Farbdichtewert, der durch das für die Farbe Yellow zugeordnete Filter (Blaufilter) erfaßt worden ist. Unter dem Begriff Nebenfarbdichte werden die übrigen Farbdichtewerte verstanden, welche kleiner sind als der Wert der Hauptfarbdichte. Bei der Druckfarbe Yellow sind dies also die Farbdichtewerte, welche sich ergeben, wenn die Farbprobe durch ein Grün- bzw. Rot-Filter gemessen wird. Bei der Durchführung des erfindungsgemäßen Verfahrens kommt dabei ein Densitometer allgemein bekannter Art zur Anwendung, dessen Filter auf die Messung der standardisierten Druckfarben Yellow, Cyan und Magenta abgestimmt ist. Dieses Densitometer kann dabei entweder ein viertes Filter zur Erfassung der Farbdichte der Farbe Schwarz aufweisen, wobei es aber auch ebenfalls möglich und bekannt ist, den Farbdichtewert für die Farbe Schwarz aus den Dichtewerten für die drei übrigen Buntfarben zu ermitteln. Dies hat seine Ursache darin, daß die Druckfarbe

2

Schwarz im sichtbaren Spektrum ingesamt einen niedrigen Remissionsgrad aufweist.

Des weiteren wird die Erfindung beispielhaft bei der Herstellung eines Druckbogens auf einer Mehrfarben-Offsetdruckmaschine erläutert. Hierin ist aber keine Beschränkung der Erfindung zu besehen, vielmehr läßt sich das erfindungsgemäße Verfahren auch bei der Herstellung anderer mehrfarbiger Druckprodukte anwenden. Das erfindungsgemäße Grundprinzip besteht dabei darin, daß eine unverschmutzte, reine Farbe eine eindeutige Korrelation zwischen den Werten der Hauptfarbdichten und der Nebenfarbdichten aufweist. Für eine vorgegebene Farbe ist somit vorhersagbar, wie stark sich die Nebenfarbdichten ändern, wenn durch eine Farbzufuhrveränderung die Schichtdicke auf dem Bedruckstoff und sich somit die Hauptfarbdichte verändert wird. Es ist somit möglich, nach Erfassung der Haupt-und Nebenfarbdichten einer zu überprüfenden Farbprobe und noch zu erläuternder Umrechnung der Werte der reinen Farbprobe sowie entsprechender Differenzbildung festzustellen, ob hier eine Farbverschmutzung vorliegt und wenn ja, durch welche andere Druckfarbe diese hervorgerufen worden ist.

Des weiteren wird im Ausführungsbeispiel das erfindungsgemäße Verfahren an der Überwachung der Farbe Yellow erläutert. Für die Farben Cyan, Magenta und Schwarz ist die Vorgehensweise dabei analog. Eingangs wird gezeigt werden, welcher Ansatz zu Berechnung der Nebenfarbdichten als Funktion der Hauptfarbdichte verwendet wird und wie dies experimentell anchweisbar ist.

In Druckversuchen wird für die Farbe Yellow eine Anzahl von Proben erstellt, bei welchen sich die Hauptfarbdichtewerte in einem vorgegebenen Bereich ändern. Die Probedrucke werden dabei derartig hergestellt, so daß die Farbe Yellow garantiert unverschmutzt, also rein gedruckt wird. Dies kann insbesondere in einem Druckvorgang geschehen, bei welchen nur die Farbe Yellow in nur einem Druckwerk verdruckt wird. Die Stufung hinsichtlich der Hauptfarbdichtewerte der Proben für die Farben Yellow geschieht dabei beispielsweise durch sukzessives Verstärken der Farbzufuhr. Mit einem Densitometer der zuvor beschriebenen Art - hierbei kann es sich auch um ein spektrales Densitometer mit digitaler Filterung handeln - werden nun die Proben hinsichtlich der Haupt- und Nebenfarbdichtewerte ausgemessen. Hier und des weiteren werden stets vollflächige Proben ausgemessen, d.h. die Meßwerterfassung erfolgt an Meßfeldern des Volltons.

Durch den zuvorstehend beschriebenen Versuch erhält man somit eine Meßwerttabelle für die Farbe Yellow, wobei jedem Wert der Hauptfarbdichte zwei Werte der Nebenfarbdichten, nämlich die entsprechenden Meßwerte durch die Rot- und Grünfilter zugeordnet sind. Aus dieser Schar von Meßwerten erfolgt nun unter Anwendung der allgemein bekannten Methbden der Regressionsrechnung eine funktionale Darstellung der Nebenfarbdichten als Funktion der zugehörigen Hauptfarbdichte. Man erhält also jeweils eine analytische Darstellung:

Nebenfarbdichte 1 = F (Hauptfarbdichte) und
Nebenfarbdichte 2 = F (Hauptfarbdichte)

Hierbei bedeuten Nebenfarbdichte 1, 2 jeweils die Farbdichtewerte, die durch das Rot-bzw. Grünfilter ermittelt worden sind. Versuche haben dabei gezeigt, daß es sich bei der analytischen Darstellung bei nicht zu hohen Genauigkeitsanforderungen um eine linearen Ansatz handeln kann. Eine genauere Analyse der so ermittelbaren Meßwertverläufe zeigt aber, daß beispielsweise die Nebenfarbdichte 1 einen zu größeren Werten der Hauptfarbdichte leicht gekrümmten Verlauf aufweist. Die Meßwerte verlaufen also entlang einer leicht gekrümmten Parabel.

Demzufolge wird vorteilhafter Weise folgender Ansatz gemacht:

Nebenfarbdichte 1 = A1 x Hauptfarbdichte x (1 + Q1 x Hauptvalenz) bzw.

Nebenfarbdichte 2 = A2 x Hauptfarbdichte x (1 + Q2 x Hauptvalenz).

Gemäß dem oben genannten Ansatz ergeben sich also für die Farbe Yellow die zu bestimmenden Größen: A1, A2, Q1, Q2. Für die übrigen Farben Cyan, Magenta, Schwarz wird dabei entsprechend vorgegangen, so daß man ebensolche Größen erhält. Zur Bestimmung der Größen für das Beispiel Yellow sind die genannten quadratischen Formeln nach den entsprechenden Größen aufzulösen, wobei sich also ergibt:

Q1 = 1 - Nebenfarbdichte 1 / Hauptfarbdichte

Q2 = 1 - Nebenfarbdichte 2 / Hauptfarbdichte

A1 = Nebenfarbdichte 1 / (Hauptfarbdichte x (1 + Q1 x Hauptfarbdichte))

A2 = Nebenfarbdichte 2 / (Hauptfarbdichte x (1 + Q2 x Hauptfarbdichte))

Gemäß den oben dargestellten Versuchen zeigt sich also, daß die Werte der Nebenfarbdichten 1, 2 bei einer reinen, unverschmutzten Farbe sehr gut in Form einer nach oben geöffneten Parabel darstellbar sind. Eine Verschmutzung der Farbe Yellow - für die übrigen Farben gilt entsprechendes - wird sich also durch eine Abweichung der Werte der Nebenfarbdichten 1, 2 von eben diesem parabelförmigen Verlauf zeigen. Es ergibt sich somit als Konsequenz, daß durch eine einzige Messung an einem Volltonmeßfeld der Farbe Yellow die zuvor beschriebenen Größen A1, A2, Q1, Q2 bestimmbar sind.

Erfindungsgemäß werden nun während des Druckens zur Überwachung der Farbverschmutzung an einem OK-Bogen an einem Volltonmeßfeld der Farbe Yellow folgende Werte bestimmt:

OK-Hauptfarbdichte,
OK-Nebenfarbdichte 1,
OK-Nebenfarbdichte 2.

Gemäß dem Ansatz:

OK-Nebenfarbdichte 1 = A1 x OK-Hauptfarbdichte x (1 + Q1 x OK-Hauptfarbdichte)

OK-Nebenfarbdichte 2 = A2 x OK-Hauptfarbdichte x (1 + Q2 x OK-Hauptfarbdichte)

werden nun durch diese Meßwerte obiger Formeln folgende Größen bestimmt:

Q1 = 1 - OK-Nebenfarbdichte 1 / OK-Hauptfarbdichte

Q2 = 1 - OK-Nebenfarbdichte 2 / OK-Hauptfarbdichte

A1 = OK-Nebenfarbdichte 1 / (OK-Hauptfarbdichte x (1 + Q1 x OK-Hauptfarbdichte))

A2 = OK-Nebenfarbdichte 2 / (OK-Hauptfarbdichte x (1 + Q2 x OK-Hauptfarbdichte))

Sodann wird mit dem Druck begonnen und die Farbführung sowohl für die hier beschriebene Farbe Yellow als auch für die übrigen Farben Cyan, Magenta, Schwarz so eingestellt, daß die an den Probebogen ermittelbaren Hauptfarbdichten bis auf einen vorgegebenen Toleranzrahmen mit den OK-Hauptfarbdichten übereinstimmen. Auch für die Farbe Schwarz gilt hierbei, daß die Hauptfarbdichte der größte Farbdichtewert ist.

Um die Färbung wahrend des Druckes zu kontrollieren werden von Zeit zu Zeit Bogen gezogen und insbesondere mit einem automatischen, traversierenden Densitometer ausgemessen. Für ein bder mehrere Volltonmeßfelder der Farbe Yellow ergeben sich nun folgende Farbdichtewerte:

Probe-Hauptfarbdichte,
Probe-Nebenfarbdichte 1,
Probe-Nebenfarbdichte 2.

Sodann werden die Nebenfarbdichtewerte Nebenfarbdichte 1, Nebenfarbdichte 2, welche am unverschmutzten Yellow-Volltonmeßfeld ermittelt worden sind (OK-Bogen) gemäß dem voranstehend beschriebenen Ansatz auf diejenigen Werte hochgerechnet, die sich beim Probe-Hauptfarbdichtewert ergeben würden. Es werden folgende Differenzwerte ermittelt:

Differenz-Nebenfarbdichte 1 = Probe-Nebenfarbdichte 1 - A1 x Probe-Hauptfarbdichte x
(1 + Q1 x Probe-Hauptfarbdichte),

Differenz-Nebenfarbdichte 2 = Probe-Nebenfarbdichte 2 - A2 x Probe-Hauptfarbdichte x
(1 + Q2 x Probe-Hauptfarbdichte).

Es wird also die Differenz der Nebenfarbdichten 1, 2 der Yellow-Volltonmeßfelder des OK-Bogens und des Probe-Bogens bestimmt, wobei wie bereits erwähnt die Werte der Probe-Nebenfarbdichte 1, 2 gemäß dem an der unverschmutzten Farbprobe ermittelten Koeffizienten des quadratischen Ansatzes auf diejenigen Werte hochgerechnet werden, welche sie bei dem Wert Probe-Hauptfarbdichte aufweisen müßten.

Da der Erfindung die Erkenntnis zu Grunde liegt, daß die Nebenfarbdichten 1, 2 eine Funktion der Hauptfarbdichte bei einer reinen, unverschmutzten Farbe sind, werden sich nun Verschmutzungen durch die Werte Differenz-Nebenfarbdichte 1, Differenz-Nebenfarbdichte 2 bemerkbar machen. Da im Offsetdruckprozeß immer eine gewisse Vermischung der Farben untereinander vorliegt, eine vollkommene Farbreinheit also nicht zu erwarten ist, sind für die Werte Differenz-Nebenfarbdichte 1, Differenz-Nebenfarbdichte 2 gewisse Toleranzrahmen vorzugeben. Überschreiten dann die voranstehend beschriebenen Differenz-Nebenfarbdichtewerte 1, 2 die vorgegebenen Toleranzrahmen, so kann beispielsweise ein Warnhinweis angezeigt werden. Vorteilhafterweise wird hier die Summe der Differenz-Nebenfarbdichtewerte gebildet, also:

$$\text{Summe-Nebenfarbdichten} = \text{Differenz-Neberfarbdichte 1} + \text{Differenz-Nebenfarbdichte 2}.$$

Auch hier wird ein Toleranzrahmen vorgegeben, so daß bei Überschreiten des Wertes Summe-Nebenfarbdichten eben dieses Toleranzwertes ein Warnhinweis an einer Anzeigevorrichtung dargestellt wird. Durch diese Summenbildung erfolgt die Anzeige eines Warnhinweise unabhängig durch welche andere Druckfarbe beispielsweise die Farbe Yellow verschmutzt worden ist. Tatsächlich läßt sich aber durch das Abweichen der Werte der Nebenfarbdichten von denjenigen Werten, welche sich im unverschmutzten Zustand ergeben müßten, feststellen, ob beispielsweise die Farbe Yellow (Volltonmeßfeld) durch ein Cyan, ein Magenta oder gar durch Schwarz verschmutzt worden ist. Sei der Wert Nebenfarbdichte 1 derjenige Farbdichtewert, welcher durch das Rot-Filter gemessen worden ist und eben Farbdichte 2 derjenige Wert einer Farbdichte, die durch das Grün-Filter ermittelt wird, so spricht ein großer Wert der Differenz-Nebenfarbdichte 1 dafür, daß die Farbe Yellow einen großen Cyan-Anteil aufweist. Entsprechendes gilt, wenn der Wert Differenz-Nebenfarbdichte 2 einen großen Wert annimmt Eine Verunreinigung durch die Farbe Schwarz ist dann anzunehmen, wenn sich die Werte Differenz-Nebenfarbdichte 1 und Differenz Nebenfarbdichte 2 in einer vorgegebenen Weise zueinander verhalten.

Weiter obenstehend wurde erwähnt, daß die für die Farbe Yellow zu bestimmenden Parameter A1, A2, Q1, Q2 aufgrund der Meßwerte OK-Hauptfarbdichte, OK-Nebenfarbdichte 1, OK-Nebenfarbdichte 2 an einem Meßfeld des OK-Bogens bestimmt werden. Die entsprechenden Parameter A1, A2, Q1, Q2 für die Farben Cyan, Magenta und Schwarz werden dabei entsprechend ebenfalls an Volltonmeßfeldern des OK-Bogens ermittelt. Da in der Regel der OK-Bogen auf der Maschine gedruckt wird, aufwelcher dann auch der Auflagendruck erfolgt, können bereits die Volltonmeßfelder für Yellow, Cyan, Magenta, Schwarz einen gewissen Grundverschmutzungsgrad aufweisen. Da aber der OK-Bogen im Zusammendruck der Farben die gewünschte farbliche Erscheinung zeigt, wird bei der Ermittlung des empirischen Zusammenhangs gemäß der zuvor beschriebenen Parameter diesem Einfluß Rechnung getragen. Durch Anwendung des erfindungsgemäßen Verfahrens ist dann während des Fortdruckes feststellbar, ob in den einzelnen Farben eine weitere Verschmutzung auftritt.

Vorzugsweise findet das erfindungsgemäße Verfahren in einer an sich bekannten Farbsteuer-und Regelanlage Verwendung. Bei derartigen Einrichtungen werden von Zeit zu Zeit während des Auflagendruckes Bogen gezogen und auf ein Abstimmpult gelegt. Mittels einem traversierendem Densitometer, welches die voranstehend beschriebenen Werte liefert, wird ein mitgedruckter Kontrollstreifen abgescannt. Durch Vergleich der entsprechenden Hauptfarbdichtewerte mit vorgegebenen Sollwerten (OK-Hauptfarbdichte) erfolgt eine zonale Steuerung der Farbzufuhr für die einzelnen Druckfarben. Über eine Eingabeeinrichtung hat nun eine Bedienperson die Möglichkeit das erfindungsgemäße Diagnosesystem zur Feststellung einer Farbverschmutzung für bestimmte Farben zuzuschalten. So ist es möglich, daß die Überwachung der Farbverschmutzung nur für eine Farbe, beispielsweise Yellow aktiviert wird. Ferner kann vorgesehen sein, daß ein sogenannter Trend der voranstehend beschriebenen Verschmutzungsparameter erstellt wird, also eine Analyse insbesondere der Differenz-Nebenfarbdichten 1, 2 über eine Vielzahl von Messungen hinweg.

Bei Vorhandensein mehrerer über den Druckbogen verteilter Meßfelder kann überdies eine örtliche Zuordnung der Verschmutzungswerte erfolgen und angezeigt werden (zonale Anzeige).

**Patentansprüche**

1. Verfahren zum Feststellen von Farbverschmutzungen beim Herstellen mehrfarbiger Druckexemplare auf Druckmaschinen, insbesondere auf Offsetdruckmaschinen, wobei an vollflächig gedruckten Meßstellen der einzelnen Farben densitometrisch in jeweils mehreren spektralen Bereichen Farbdichtewerte in Form des größten Farbdichtewertes als Hauptfarbdichte und den übrigen als Nebenfarbdichten bestimmt und ausgewertet werden **dadurch gekennzeichnet,**
daß von mindestens einem einwandfreien Druckexemplar die Werte von den Haupt- und Nebenfarbdichten gemessen werden, daß aus diesen Werten der Haupt- und Nebenfarbdichten ein Rechenmodell der „Nebenfarbdichten als Funktion der Hauptfarbdichte" erstellt wird, das zum jeweiligen Wert der Hauptfarbdichte des zu überprüfenden Druckexemplars anhand des Rechenmodells Nebenfarbdichten errechnet und mit den gemessenen Nebenfarbdichten des zu überprüfenden Druckexemplares Differenz bildend verglichen werden und daß aus dem Differenzbetrag die Farbverschmutzung abgeleitet wird.

2. Verfahren nach Anspruch 1,

**dadurch gekennzeichnet,**
daß die Nebenfarbdichten der mit unverschmutzter Farbe gedruckte Meßstelle als Funktion der Hauptfarbdichte gemäß dem Ansatz:

Nebenfarbdichte = A x Hauptfarbdichte x (1 + Q x Hauptfarbdichte)

berechnet werden, wobei A, Q Koeffizienten sind.

3. Verfahren nach Anspruch 1 oder 2
   **dadurch gekennzeichnet,**
   daß die Werte der Haupt- und Nebenfarbdichten für eine unverschmutzte Farbe an den Meßfeldern eines OK-Bogens bestimmt werden.

4. Verfahren nach einem der vorhergehenden Ansprüche,
   **dadurch gekennzeichnet,**
   daß die Meßstellen mitgedruckte Volltonmeßfelder einer Kontrolleiste sind.

5. Verfahren nach einem der vorhergehenden Ansprüche,
   **dadurch gekennzeichnet,**
   daß zur Bildung eines Maßes für die Farbverschmutzung einer Farbe die Summe der Differenzbeträge der von mehreren spektralen Bereichen gewonnenen Nebenfarbdichtewerte gebildet wird.

**Claims**

1. Method for detecting colour impurities in the manufacture of multi-colour printed products on printing presses, particularly on offset printing presses, wherein, at full surface printed measuring locations, the individual inks are determined and evaluated densitometrically in each case at several spectral regions with colour density values in the form of the largest colour density value as main colour density and the remainder as auxiliary colour densities, characterised in that from at least one problem-free print sample, the values of the main and auxiliary colour densities are measured, that from these values of the main and auxiliary colour densities, a calculation model of the "auxiliary colour densities as a function of the main colour densities" is produced, that for each respective value of the main colour density of the print sample to be checked, auxiliary colour densities are calculated with the aid of the calculation model and are compared with the measured auxiliary colour densities of the print sample to be checked forming differences and that from the amount of the difference, the colour impurity is derived.

2. Method according to Claim 1, characterised in that the auxiliary colour densities of the measuring location printed with uncontaminated ink are calculated as a function of the main colour density in accordance with the relationship: Auxiliary colour density = A x Main colour density x (1 + Q x Main colour density) , wherein A, Q are coefficients.

3. Method according to Claim 1 or 2, characterised in that the values of the main and auxiliary colour densities are determined for an uncontaminated ink on the measuring fields of an OK sheet.

4. Method according to one of the preceding Claims, characterised in that the measuring locations are co-printed full tone measuring fields of a checking strip.

5. Method according to one of the preceding Claims, characterised in that to form a measure for the colour contamination of one colour, the sum of the amounts of difference of the auxiliary colour density values obtained from several spectral ranges is formed.

**Revendications**

1. Procédé destiné à la détection d'impuretés de couleurs lors de la réalisation de produits d'impression polychromes sur des machines d'impression, notamment des machines d'impression offset, selon lequel des valeurs de pureté de couleur sont déterminées et évaluées par densitométrie dans plusieurs domaines spectraux sur des emplacements de mesure imprimés sur toute leur surface des différentes couleurs, et ce sous la forme de la valeur de pureté de couleur la plus élevée en tant que pureté principale de couleur, et les autres en tant que puretés secondaires de couleur,
   caractérisé en ce que

les valeurs des puretés principales et secondaires de couleur d'au moins un exemplaire d'impression impeccable sont mesurées, en ce qu'à partir de ces valeurs des puretés principales et secondaires de couleur est établi un modèle de calcul des "puretés secondaires de couleur en tant que fonction de la pureté principale de couleur", en ce que des puretés secondaires de couleur sont calculées à l'aide du modèle de calcul pour chaque valeur de pureté principale de couleur de l'exemplaire d'impression à vérifier, et comparées par formation de différence avec les puretés secondaires de couleur mesurées de l'exemplaire d'impression à vérifier, et en ce que l'impureté de couleur est déduite de la valeur de différence.

2. Procédé selon la revendication 1,
   caractérisé en ce que
   les puretés secondaires de couleur de l'emplacement de mesure imprimé avec de la couleur sans impureté sont calculées en tant que fonction de la pureté principale de couleur selon la formule :
   pureté secondaire de couleur = A x pureté principale de couleur x (1 + Q x pureté principale de couleur) ,
   A, Q étant des coefficients.

3. Procédé selon la revendication 1 ou 2,
   caractérisé en ce que
   les valeurs des puretés principales et secondaires de couleur d'une couleur sans impureté sont déterminées sur les champs de mesure d'une feuille OK.

4. Procédé selon l'une quelconque des revendications précédentes,
   caractérisé en ce que
   les emplacements de mesure sont des champs de mesure de teinte homogène imprimés en même temps d'une bande de contrôle.

5. Procédé selon l'une quelconque des revendications précédentes,
   caractérisé en ce que
   la somme des différences des valeurs de pureté secondaire de couleur obtenues dans plusieurs domaines spectraux est établie pour former un degré d'impureté d'une couleur.